# EUROPEAN PATENT APPLICATION

(11) **EP 1 612 981 A2**
(43) Date of publication of application: **04.01.2006**
(21) Application number: 05013349.5
(22) Date of filing: 21.06.2005
(51) Int. Cl.: H04L 1/00

(54) **Communications device and wireless communications system using link adaption**

(30) Priority: 02.07.2004 JP 2004197009
(71) Applicant: FUJITSU LIMITED, Kawasaki-shi, Kanagawa 211-8588 (JP)
(72) Inventor: Nibe, Keiji, Fujitsu Limited, Kawasakashi Kanagawa 211-8588 (JP); Nishikawa, Takurou, Fujitsu Limited, Kawasakashi Kanagawa 211-8588 (JP)
(74) Representative: HOFFMANN EITLE

(57) **Abstract**

Transmissions are made controllable, taking into consideration the effects of the channels that can be transmitted on in a burst state. A communications device for transmitting adaptive modulation control parameters for communication devices that control adaptive modulation, comprises a measuring device operable to measure the reception environment and a parameter generator operable to generate the adaptive modulation control parameters based on measurement results of the reception environment and on a reception status of a predefined channel within a period of the measurement of the reception environment.

## Description

### CROSS REFERENCE TO RELATED APPLICATION

This application is related to and claims priority to Japanese Application No. 2004-197009 filed July 2, 2004 in the Japanese Patent Office, the contents of which are incorporated by reference herein.

### BACKGROUND OF THE INVENTION

### 1. Field of the Invention

The present invention relates to wireless communications systems and communications devices, an in particular, it relates to a mobile wireless communications system, using the W-CDMA (UMTS) communication format, and a mobile station and wireless base station used in said system..

### 2. Description of the Related Art

Currently, the standardization of the W-CDMA (UMTS) format is advancing as one of the formats of the third generation mobile communication systems, 3rd Generation Partnership Project (3GPP). In addition, the High Speed Downlink Packet Access (HSDPA) is regulated to provide a maximum downlink transmission rate of about 14 Mbps as one of the subjects of the standardization.

HSDPA utilizes an adaptable-encoding modulation system. For example, the QPSK modulation and 16-bit QAM systems can adaptively switch between the base and mobile stations in response to the wireless environment.

In addition, HSDPA utilizes the Hybrid Automatic Repeat reQuest (H-ARQ) system. In the case of H-ARQ, if the mobile station detects an error in the data received from the base station, the abovementioned mobile station sends a request for retransmission to the base station and the base station retransmits the data. The mobile station utilizes both the received data and the retransmitted receiving data and decrypts error-correction. The benefits of error-correction decryption increase as H-ARQ utilizes the already received data effectively, controlling the number of retransmissions.

The main wireless channels utilized by HSDPA include: High-Speed Shared Control Channel (HS-SCCH), High-Speed Physical Downlink Shared Channel (HS-PDSCH), and High-Speed Dedicated Physical Control Channel (HS-DPCCH).

Both HS-SCCH and HS-PDSCH are common downward channels (in other words, in the direction from the base station to the mobile station) and HS-SCCH is the control channel to transmit the various parameters regarding transmitting data to HS-PDSCH. Examples of various parameters include, for example: information of modulation type indicating which modulation system to use to transmit data from HS-PDSCH and information of rate matching processing patterns assigned to the allocated number (code number) and transmission data of the diffusion code.

On the other hand, HS-DPCCH is the individual upward control channel from the mobile station to the base station. The HS-DPCCH is utilized when the mobile station transmits ACK and NACK signals to the base station in response to whether or not the data can be received as the data passes through the HS-PDSCH. Furthermore, the NACK signal is transmitted from the mobile station when the mobile station fails to receive the data (when the received data has a CRC error, etc.) and the base station executes the retransmission controls.

HS-DPCCH is utilized to periodically transmit the measurement results of the receiving signal reception quality (e.g., SIR) from the mobile station as CQI (Channel Quality Indicator) to the base station. The base station determines the quality of the downlink wireless environment according to the received CQI and if favorable, the modulation system changes to transmit data at high-speeds. If the wireless environment is not favorable, the modulation system appropriately changes to transmit data at lower speeds.

Channel Configuration

The explanation of the HSDPA channel configuration is as follows:

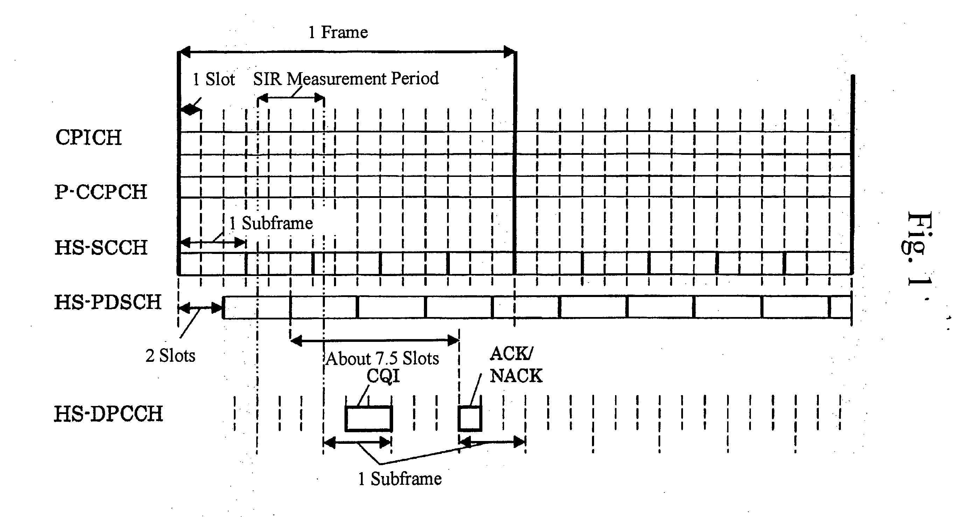

Figure 1 is a diagram showing HSDPA's channel configurations. Furthermore, each channel is separated into codes for W-CDMA to utilize the code division multiple access system.

Firstly, the as yet unexplained channels will be simply explained.

CPICH (Common Pilot Channel) and P-CCPCH (Primary Common Control Physical Channel) are common downward channels.

CPICH is a channel utilized as the timing standard for other downward physical channels for channel estimations, cell searches, and within identical cells of the mobile station; in other words, this is a channel to transmit pilot signals. There is one P-CCPCH for each cell and it is a channel that can be used to transmit announcement information.

Explanation of each channel's timing is as follows, using Figure 1.

As shown in the diagram, each channel is configured with 15 slots (each slot corresponds to 2560 chip lengths) for one frame (10 ms). As explained above, since CPICH is utilized as the standard for other channels, the start of CPICH's frame matches with the starts of P-CCPCH and HS-SCCH's frames. The start of HS-PDSCH's frame is delayed by 2 slots when compared to HS-SCCH, etc., however, after the mobile station receives the modulation type information through HS-SCCH, HS-PDSCH can be demodulated with the demodulation method corresponding to the received modulation type. In addition, HS-SCCH and HS-PDSCH configure 3 slots for 1 subframe.

HS-DPCCH is an upward channel and utilized to transmit the ACK/NACK response signals, used to confirm receipt from the mobile station to the base station after a lapse of about 7.5 slots after HS-PDSCH is received. In addition, the second and third slots are utilized for periodic feedback transmissions to the base station of CQI information for adaptive modulation control. The transmission of the CQI information is based on the reception environment (i.e. SIR calculation results of CPICH) calculated during the period from before the 4th slot to before the 1st slot of CQI transmission.

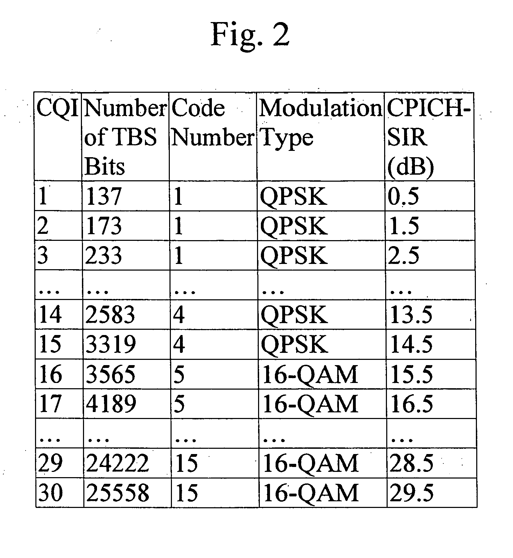

Figure 2 shows the CQI table utilizing the SIR (Signal to Interference Ratio) of CPICH.

As shown in the diagram, the table defines the number of TBS (Transport Block Size) bits, code number, modulation type, and CPICH-SIR for each of CQI information 1-30.

The number of TBS bits refers to the number bits transmitted within 1 subframe, the code number refers to the diffusion code number utilized in HS-PDSCH transmission, and modulation type to whether either QPSK or QAM is utilized.

As is clear from the diagram, it is known that the more SIR (large SIR) of CPICH is favorable, the value of CQI also increases. The larger the value of CQI, the more corresponding numbers of TBS bits and diffusion code also increase and the modulation method also switches to the QAM modulation method, and, as a result, the more SIR is favorable, the faster the transmission speed becomes.

The table shown in the diagram, for example, is stored in the memory in the mobile station. As was explained previously for the mobile station, the SIR of CPICH is measured during the measurement period of the reception environment, the CQI corresponding to the SIR measured with reference to the recorded table is specified, and transmission to the base station is made.

Since the base station adjusts the modulation controls as previously explained, according to the received CQI information, transmission can be controlled, taking into consideration the reception environment of CPICH for the mobile station.

The above was a simple explanation of HSDPA's channel configuration.

The items stated above related to HSDPA are disclosed for example in the following 3rd Generation Partnership Project: Technical Specification Group Radio Access Network; Multiplexing and channel coding (FDD) (3G TS 25.212).

According to the previously explained background art, the mobile station (reception device) measures the reception environment, and by reporting the results to the base station (transmitting device), the transmitting device can control the adaptive modulation in response to the reception environment.

However, as can be understood by referring to Figure 1, the channel that can transmit signals at high speed (HS-PDSCH) also simultaneously transmits within the reception environment measurement period (SIR measurement period).

Ordinarily, if the transmission of this sort of high-speed signal is carried out continuously, large differences in the reception environment during periodic measurement periods and the reception environment afterwards, while the high speed signal is transmitted to the reception device according to the reported reception environment, would be minimal. However, if the transmission of the high speed signal is in a burst state (existing both during transmission and non-transmission periods), there may be large differences between the measurements of the reception environment during a period when the high speed signal is not transmitted and the reception environment afterwards, when the high speed signal is actually transmitted to the reception device. This is because the effect of the multi-pass, etc., may interfere with the signal itself, transmitted to its reception device.

Accordingly, a need arises to make transmissions controllable, taking into consideration the effects of the channels on which transmissions are made in a burst state.

### SUMMARY OF THE INVENTION

Accordingly, one of the purposes of this invention is to make transmissions controllable, taking into consideration the effects of the channels on which transmissions are made in a burst state.

Furthermore, not restricted to the above-mentioned purpose, it can also be proposed that one of the purposes of this invention is to attain results not available to conventional technology as the result of the various configurations indicated as the best to implement the invention described hereinafter.

In one embodiment of the present invention, a communications device for transmitting adaptive modulation control parameters for communication devices that control adaptive modulation, comprises a measuring device operable to measure the reception environment and a parameter generator operable to generate the adaptive modulation control parameters based on measurement results of the reception environment and on a reception status of a predefined channel within a period of the measurement of the reception environment.

The communications device further comprises a transmission rate generator operable to generate a transmission rate based on the generated adaptive modulation control parameters, wherein the transmission rate generated when the predefined channel is not transmitted to any of the mobile stations is a lower transmission rate than the transmission rate generated when the predefined channel is at least transmitted to the communications device within the measurement period.

The parameter generator is further operable to reflect in the parameters generated when the predefined channel is not transmitted to any of the mobile stations the measurement results when the predefined channel is at least transmitted to the communications device within the measurement period.

The measuring part is further operable to divide the measurement period into a first measurement period and a second measurement period and to combine weighted measurement results from both periods to form the measurement result.

The reception status of the predefined channel is determined according to whether or not the predefined channel was transmitted to the communications device within the measurement period.

The reception status of the predefined channel is determined based on whether or not a non-transmission period of the predefined channel is assumed to be included within the measurement period.

The assumption of whether or not a non-transmission period of the predefined channel is included within the measurement period is determined based on a total reception level and a total received power.

In one embodiment of the present invention, a mobile station in a mobile communications system compatible with HSDPA comprises a CQI information generator operable to generate CQI information to be transmitted to a base station based on an HS-PDSCH reception status during a CPICH reception quality measurement period.

The mobile station further comprises a transmission rate generator operable to generate a transmission rate based on the generated CQI information, wherein the transmission rate generated when the HS-PDSCH is not transmitted to any of the mobile stations is a lower transmission rate than the transmission rate generated when the HS-PDSCH is at least transmitted to the mobile station within the CPICH reception quality measurement period.

The CQI information generator is further operable to reflect in the CQI information generated when the HS-PDSCH channel is not transmitted to any of the mobile stations the measurement results when the HS-PDSCH channel is at least transmitted to the mobile station within the CPICH reception quality measurement period.

The mobile station further comprises a measuring part operable to divide the CPICH reception quality measurement period into a first measurement period and a second measurement period and to combine weighted measurement results from both periods to form the CPICH reception quality measurement result.

The HS-PDSCH reception status is determined according to whether or not the HS-PDSCH channel was transmitted to the mobile station within the measurement period.

The HS-PDSCH reception status is determined based on whether or not a non-transmission period of the HS-PDSCH channel is assumed to be included within the measurement period.

The assumption of whether or not a non-transmission period of the HS-PDSCH channel is included within the CPICH reception quality measurement period is determined based on a total reception level and a total received power.

In one embodiment of the present invention, a communications device operable to receive information on parameters dependent on a reception environment from at least one reception device that is a potential target of data transmission using a common channel and to carry out transmission of data to the reception device through the common channel, the communications device comprises a notification device operable to notify regarding whether data is transmitted through the common channel to none of the at least one reception devices or data is transmitted through the common channel to any of the at least one reception device.

The data that is transmitted through the common channel to at least one reception device, is not limited to transmission to the reception device that is the notification target.

In one embodiment of the present invention, a communications device comprises a reception device operable to receive from a transmission device notification regarding whether data is transmitted through a common channel to none of at least one reception devices or data is transmitted through the common channel to any of the at least one reception devices and a transmission processor operable to transmit adaptive modulation control parameters based on the notification.

The data that is transmitted through the common channel to at any of the least one reception devices, is not limited to transmission to the reception device that is the notification target.

In one embodiment of the present invention, in a wireless communications system having a transmission device operable to carry out adaptive modulation control and a reception device operable to receive a signal from the transmission device, a communications device comprises a controller operable to carry out adaptive modulation control based on a reception status of the signal transmitted by the transmitting device by the reception device.

The controller comprises a parameter generator operable to generate the adaptive modulation control parameters based on measurement results of the reception environment and on a reception status of a predefined channel within a period of the measurement of the reception environment.

The communications device further comprises a transmission rate generator operable to generate a transmission rate based on the generated adaptive modulation control parameters, wherein the transmission rate generated when the predefined channel is not transmitted to any of the mobile stations is a lower transmission rate than the transmission rate generated when the predefined channel is at least transmitted to the communications device within the measurement period.

The parameter generator is further operable to reflect in the parameters generated when the predefined channel is not transmitted to any of the mobile stations the measurement results when the predefined channel is at least transmitted to the communications device within the measurement period.

The measuring part is further operable to divide the measurement period into a first measurement period and a second measurement period and to combine weighted measurement results from both periods to form the measurement result.

The reception status of the predefined channel is determined according to whether or not the predefined channel was transmitted to the communications device within the measurement period.

The reception status of the predefined channel is determined based on whether or not a non-transmission period of the predefined channel is assumed to be included within the measurement period.

The assumption of whether or not a non-transmission period of the predefined channel is included within the measurement period is determined based on a total reception level and a total received power.

In one embodiment of the present invention, a communications device operable to receive information on parameters dependent on a reception environment from a reception device that is a potential target of a data transmission and to affect the transmission of data through the common channel based on adaptive modulation control based on the parameter information, the communications device comprises a controller operable to perform adaptive modulation control based on the parameter information and on a transmission status of data from the communications device through the common channel.

In one embodiment of the present invention, a wireless base station in an HSDPA-compatible wireless communications system, comprises a controller that carries out modulation control based on a transmission status of a HS-PDSCH channel and CQI information from the mobile station.

In one embodiment of the present invention, an HSDPA wireless base station in a mobile communication system, comprises a notification device operable to notify a mobile device of a transmission status of a HS-PDSCH channel and a controller operable to perform adaptive modulation control based on CQI information generated by the mobile device based on the notification.

### BRIEF DESCRIPTION OF THE DRAWINGS

Figure 1 is a diagram showing the channel configuration of HSDPA

Figure 2 is a diagram showing an example of a CQI table

Figure 3 is a diagram showing a communications device (mobile station), according to the present invention.

Figure 4 is a schematic diagram of CQI generation.

Figure 5 is a diagram showing a wireless base station, according to the present invention.

Figure 6 is a diagram showing a wireless base station, according to the present invention.

### DETAILED DESCRIPTION OF THE PREFERRED EMBODIMENTS

Referring to the diagrams, explanations of the embodiments of this invention are as follows.

Description of Preferred Embodiment 1

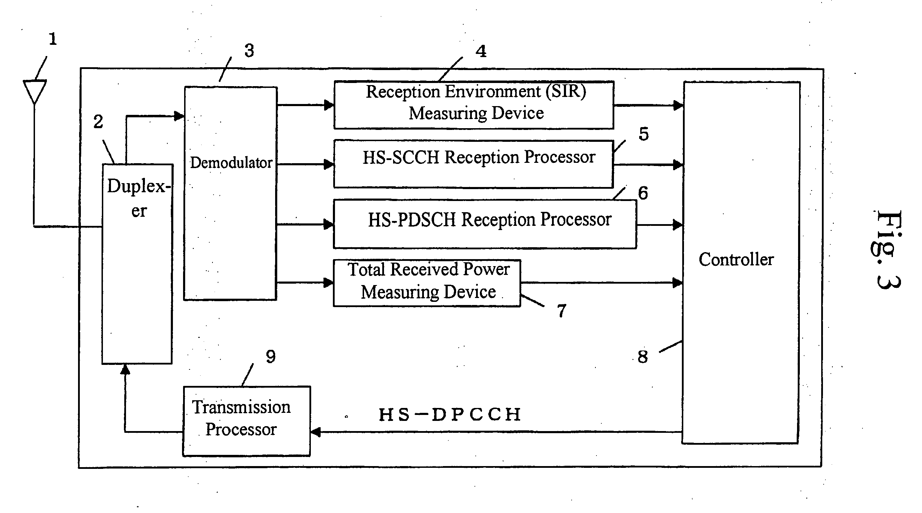

Figure 3 shows the communications device relating to this invention. A mobile station utilized as a mobile communications system compatible with WCDMA (UMTS) using HSDPA is explained as an example of the communications device. Of course, application to communications devices used in other mobile communication systems is also possible.

In the diagram, 1 refers to the antenna; 2 refers to the duplexer; 3 refers to the demodulator; 4 refers to the reception environment (SIR) measuring device; 5 refers to the HS-SCCH reception processor; 6 refers to the HS-PDSCH reception processor; 7 refers to the total received power measuring device; 8 refers to the controller; and 9 refers to the transmission processor.

The mobile station receives the downward channels (i.e. CPICH, P-CCPCH, HS-SCCH, HS-PDSCH, etc.) from antenna 1 and sends them to demodulator 3 through duplexer 2. Demodulator 3 executes the reception process of orthogonal detection on the received signals and sends the demodulated signals to the reception environment (SIR) measuring device 4, HS-SCCH reception processor 5, HS-PDSCH reception processor 6, and total received power measuring device 7.

Reception environment measuring device 4 measures the reception environment utilized to specify CQI information as the parameters used to control the adaptive modulation of the base station. As an example, the SIR of CPICH, a downward signal, is measured. Obviously, the signal quality indicated by the wireless base station can be evaluated by different measurements.

Furthermore, the transmission of the CQI information is based on the reception environment calculated during the period from before the fourth slot to before the first slot. There are different measuring periods, but measuring within 20 ms once, repeating and transmitting the same measurement results for the first to the fourth subframe, halting the transmission of the remaining 6 subframes, measuring once until the next wireless frame, and transmitting using the same predetermined subframe can also be done.

HS-SCCH reception processor 5 is a reception processor that receives the signals transmitted through HS-SCCH, as shown in Figure 1. The presence of a message for the local station is determined by receiving, demodulating, and decrypting the various first slots of the HS-SCCH.

The first slot has convolution-coded Channelization Code Set information (Xccs) and Modulation Scheme information (Xms) and is the slot where the multiplied User Equipment identity (Xue) signal is transmitted. The mobile station utilizes the Xue of the local station and determines whether the message is addressed to the local station by executing reverse calculation and decrypting processes. If the message is determined as being addressed to the local station, the remaining slots of HS-SCCH receive and attempt to receive the two-slot-delayed HS-PDSCH.

Upon receiving HS-PDSCH, the reverse diffusion code specified by Xccs is set and demodulation is executed by the demodulation method compatible with the modulation method specified by Xms. Furthermore, after HS-SCCH's 2 slots, Transport Block Size information (Xtbs), Hybrid ARQ Process information (Xhap), Redundancy and constellation Version (Xrv), and New Data indicator (Xnd) are included. The meaning and purpose of this information are well known, therefore, the explanations will be shortened.

HS-PDSCH reception processor 6 executes the reception process when a message addressed to the local station is present at HS-SCCH reception processor 5. The results of demodulation and decryption are output to controller 8. As previously explained, information necessary to execute the demodulation process can be obtained by receiving through HS-SCCH. Controller 8 can also confirm the actual transmission addressed to the local station through HS-PDSCH from the decryption results (i.e. no CRC errors).

Total received power measuring part 7 is a device that measures the total transmitted/received power. The total received power in the reception environment measuring part 4 within the measurement period of the reception environment is measured and reported to controller 8. This is changed to an electrical signal and the level is measured and can also be utilized.

Furthermore, HS-SCCH reception processor 5, HS-PDSCH reception processor 6, and total received power measuring part 7 notify controller 8 of the reception status of the predetermined channel (HS-PDSCH).

Controller 8 recognizes the reception status of HS-PDSCH, based on the signals from HS-SCCH reception processor 5, HS-PDSCH reception processor 6, and total received power measuring device 7, and parameters for CQI information are generated based on the recognized reception status and the measurement results from the reception environment measuring device 4, and are sent to transmission processor 9. Accordingly, controller 8 also functions as a parameter generator (CQI information generator).

In addition, controller 8 demodulates the data received by HS-PDSCH, and a CRC check determines whether the data can be received. If there is no CRC error, an ACK signal is generated, and if there is a CRC error, a NACK signal is generated, and sent to transmission processor 9.

Transmission processor 9 transmits CQI information, ACK, and NACK signals from the controller through the predetermined slots of HS-DPCCH.

The above was an explanation of each component's operation, as shown in Figure 3. Furthermore, the base station transmits using compatible transmission (modulation) methods, based on CQI information received through HS-DPCCH. When the ACK signal is received, the next new data is transmitted. The transmission data is retransmitted if the NACK signal is received or the ACK signal is not received within the predetermined time after transmission.

Method of Generating CQI Information 1

Explanation of the method to generate CQI information, the parameters transmitted by the mobile station to the base station, is as follows.

In this example, controller 8 determines whether HS-PDSCH was transmitted to the local device within the SIR measurement period of the reception environment measuring device 4. If the transmission of controller 8 was determined, the delayed CQI information is selected as the transmission speed when non-transmission is determined.

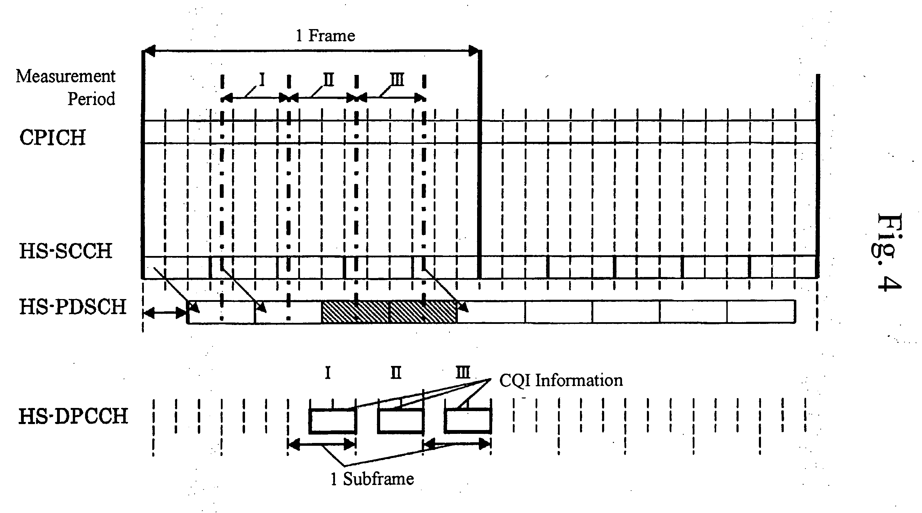

As shown in Figure 4, the mobile device measures each measurement period I, II, and III for SIR of CPICH, as an example, using the reception environment measuring device 4.

As indicated by the arrows in the diagram, each of the first slots of the first and second subframes of HS-SCCH provide advanced notification that data will be transmitted through HS-PDSCH, addressed to this mobile device.

The mobile device is then able to recognize the transmissions addressed to at least the local device for the first and second subframes of HS-PDSCH by HS-SCCH reception processor 5. Accordingly, the reception environment measured during the measurement period I is measured in the environment during HS-PDSCH transmissions. Referring to the table in Figure 2, CQI information compatible with the measurement value is selected and sent to transmission processor 9 as CQI information I.

However, HS-SCCH reception processor 5 may detect no transmission of advance notice of HS-PDSCH for the third subframe of HS-SCCH.

In this case, it is possible that data has not been transmitted to any of the mobile devices for the third subframe of HS-PDSCH. Accordingly, the reception environment measured during measurement period II includes this type of period and it may be recognized that the results, by chance, were measured under a favorable environment without the transmission of HS-PDSCH. Therefore, controller 8 decreases the CQI value (select parameters to decrease transmission speed by adjusting modulation).

The first method to decrease CQI is to select a smaller CQI that is compatible with measured SIR by referring to the separate table regarding CQI and selecting CQI information compatible with the measured SIR in the separate table. Even if the SIR from the separate tables is the same, the compatible relationship between CQI information and SIR is defined to select the smaller CQI information from the CQI in Figure 2.

The second method to decrease the size of CQI is to correct the measurement value of the SIR itself with a predetermined value and to refer to a table similar to Figure 2.

As explained in the above, CQI information II compatible with measurement period II is transmitted to the base station after correcting it to a smaller value.

Furthermore, as there is no advanced transmission notification of HS-PDSCH to the mobile station for the forth subframe of HS-SCCH during measurement period III, there still may be a possibility that this is a non-transmission (the reception environment is especially favorable) period of the HS-PDSCH to the mobile station. Therefore, the CQI information is corrected to a small value, similar to the CQI generated by measurement period II, and the corrected CQI information is transmitted to the base station.

The above was an explanation of a first method of generating CQI information. An explanation of a second method of generating CQI information is as follows.

Method of Generating CQI Information II

Previously measured reception environment and CQI information can be used in other methods of generating CQI information.

For example, HS-PDSCH can be recognized whether it has been transmitted to the local device during measurement period I. Controller 8 generates CQI compatible with measured SIR, referring to the table in Figure 2, and sends it to transmission processor 9. Controller 8 then records the measured SIR or the generated CQI information in a memory (not shown). The CQI specified in the CQI table may be flagged.

As previously explained, HS-SCCH reception processor 5 detects that the period of HS-PDSCH's non-transmission to the local device is included in measurement period II, therefore, controller 8 reads the recorded (flagged) and previously transmitted CQI information and sends it to transmission processor 9.

Furthermore, if the recorded information is the measured SIR, the measured SIR is read from the memory and compatible CQI information is specified, using the table in Figure 2. Similarly, the information can be sent to transmission processor 9.

Even during measurement period III, the similarly generated CQI information based on the measured SIR during measurement period I is sent to transmission processor 9.

As previously explained, reception in response to the modulation adjustment is smooth by utilizing the immediately preceding CQI information, compatible with the results measured during the period of HS-PDSCH's transmission to the local device.

Furthermore, as the period of HS-PDSCH's transmission to the mobile device is included in measurement period II, the measurement results of measurement period II are utilized to generate and transmit CQI information. CQI information compatible with measurement results from measurement periods I and II can be transmitted during measurement period III.

In this manner, generated CQI information, based on at least the measurement results during the period of HS-PDSCH's transmission to the local device, can be applied as CQI information compatible with the period of HS-PDSCH's non-transmission to any of the mobile stations.

The above example reflects the application of at least the measurement results during the period of HS-PDSCH's transmission to the local device to the generation of the CQI information compatible with the period of HS-PDSCH's non-transmission to any of the mobile stations.

In addition to applying the previously generated CQI information as the current CQI information, other methods of reflection include taking the average of both CQI information and utilizing the CQI after combining the attached weight.

In addition, controller 8 detects changes in reception status and can erase (not use) the recorded CQI information when recording the previously generated CQI (SIR) information.

For example, if a long time has elapsed since the generation of this CQI information, the propagation environment is assumed to have changed and the reliability of the recorded CQI information decreases. It is preferred that a timeout from the timer is detected after the lapse of a predetermined amount of time from the previous CQI generation. In the event of a timeout, the recorded CQI information does not have to be utilized (erase). It is desirable to transmit the CQI information for the most recent measurement period.

When the total number of passes correlates beyond the predetermined value or the diffusion value of the generated delay profile for the searcher exceeds the predetermined value, the CQI information takes these opportunities to be recorded. If the searcher (not shown) of reception environment measuring device 4 detects the reception timing for the various passes of the pilot signals received by the multipass, the recorded CQI information does not have to be utilized (erase).

In this example, reception status of HS-PDSCH is evaluated utilizing the advanced transmission notification of HS-PDSCH for HS-SCCH, however, the reception status of HS-PDSCH is evaluated by the reception processing results (i.e. CRC check results) for the HS-PDSCH reception processor 6. However, as the entire subframe of HS-PDSCH, where the later part of measurement period I and transmission timing overlap, has not been received when transmitting the CQI information I, therefore, only the reception status of HS-PDSCH during the first half of the measurement period can be evaluated. However, the generation of an error is suppressed when the reception status of HS-PDSCH is not evaluated at all.

Other Methods to Evaluate the Reception status of HS-PDSCH

In the previous example, the processing results of HS-SCCH reception processor 5 and HS-PDSCH reception processor 6 were utilized to evaluate the reception status of HS-PDSCH.

Explanation of the measurement results utilized in the evaluation methods for the total transmitted/received power measuring part 7 is as follows.

The total received power measuring part 7 calculates, at the least, the measurement results of the total received power for each of the reception environment measurement periods (I, II, III) and determines whether the total received power is smaller than the predetermined standard. If the value is determined as being smaller than the predetermined standard, the possibility that HS-PDSCH is not being transmitted is high. This is because HS-PDSCH is a high-speed downward channel and the transmitted electrical signal for the CPICH is sufficiently large.

Accordingly, if the total received power is below the predetermined standard, the HS-PDSCH is considered as not being transmitted to local and other stations. Controller 8 either corrects the CQI value to a small value or records the CQI value corresponding to the period where the total received power exceeded the predetermined standard. The CQI value immediately before recording is applied as the transmitted CQI value.

In addition, the total received power measuring device 7 measures the total received power right after the start of each subframe of HS-PDSCH. The transmission status of HS-PDSCH is determined as having changed when the total received power broadly increases. The measured value during the corresponding measured period is made valid, referring to the table in Figure 2, the corresponding CQI information is read, and sent to transmission processor 9. On the other hand, if the total received power broadly decreases, the transmission status of HS-PDSSCH is determined to have changed to a transmission halt status from a transmitting status. CQI information, during the corresponding measurement period, is corrected.

Description of Preferred Embodiment 2

In a second embodiment, by executing in the measurement period of the reception environment, parameters that take into consideration the reception status of HS-PDSCH can be generated.

As shown in Figure 1, portions of HS-PDSCH's two subframes are included in the measurement period. A portion of one of the subframes corresponds to the first half of the measurement period and a portion of the other subframe corresponds to the latter half of the measurement period.

In this practical example, SIR measuring device 4 defines the measurement period's first half as the first period and the latter half as the second period. Furthermore, the first and second periods each are made up of exactly half of one subframe each. When a duplicate of a subframe's middle portion is permitted, an opening may open up in the middle of that one subframe.

When these items are defined, the reception environment measuring device 4 does not average the SIR for the entire measurement period but calculates the SIR for the first and second period. Weights are added and combined and then sent to controller 8.

The weights are selected to ensure that the smaller SIR measurement value has more influence over the larger SIR measurement value. For example, weight of SIR value (large): weight of SIR value (small) = 0.8: 0.2 or 1:0 and are combined.

Controller 8 specifies CQI information, referring to the CQI table in Figure 2, based on the SIR after it is weighted and combined. This is then transmitted through the transmission processor 9.

The above was an explanation of the second embodiment, however, if the SIR is not relatively favorable, the influence of the measured SIR for the relatively unfavorable side for SIR is increased to assume the reception status when HS-PDSCH is transmitted. Controller 8 generates parameters based on the reception status of HS-PDSCH.

Description of Preferred Embodiment 3

In the third embodiment, the wireless base station notifies the mobile station that data will not be transmitted to any of the mobile stations through HS-PDSCH or that data will be transmitted to any of the mobile stations through HS-PDSCH, not limited only to notified mobile stations.

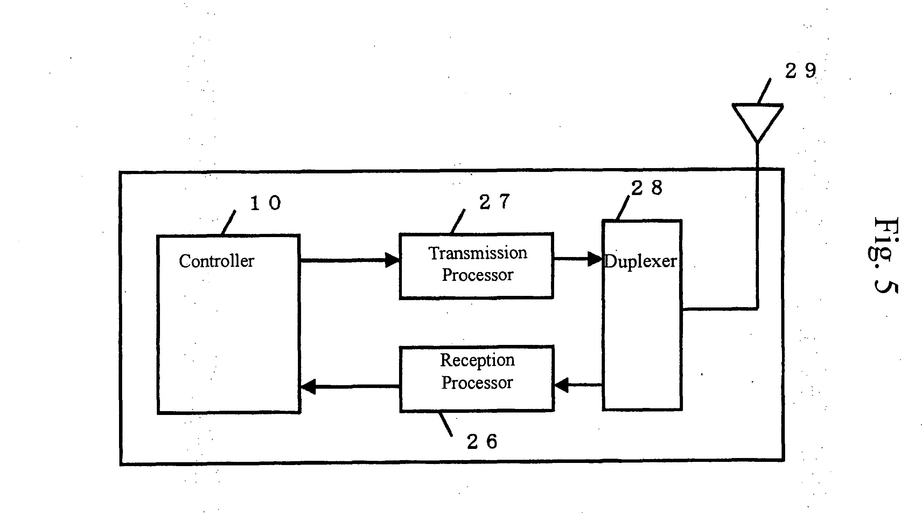

Figure 5 shows a block diagram of the wireless base station as the communications device (transmitting device).

The wireless station in the diagram has a controller 10, a reception processor 26, a transmission processor 27, a duplexer 28, and an antenna.29.

Controller 10 controls the various blocks in the wireless base station and processes the reception data from the reception processor 26. In addition, the controller has a function to send transmission data to transmission processor 27.

Duplexer28 is utilized when using common antenna 29.

Reception processor 26 executes the reception process for the transmitted signals through the upward channel, as shown in Figure 1. Transmission processor 27 executes the transmitting process for the transmitted signals through the downward channel.

In this embodiment, controller 10 sends notification data to transmission processor 27 that data will not be transmitted to any of the mobile stations through HS-PDSCH (first status) or that data will be transmitted to at least one of the mobile stations through HS-PDSCH (second status). The transmission is controlled as a downward signal.

Preferably, notifications will be transmitted to several mobile stations that can be notified through P-CCPCH. Transmission before the second or first slots of HS-PDSCH's transmission, as in Figure 1, would be better. If the mobile stations can be utilized while generating CQI, other slots can be used for transmission.

On the other hand, the mobile station receives the corresponding notification by the P-CCPCH reception processor, not illustrated in Figure 3, and corrects the SIR measurement results of reception environment measuring device 4, based on this notification.

In other words, if controller 8 detects the first status according to the notification, the SIR measurement value is corrected to a smaller value. After the correction, referring to the table in Figure 2, the CQI is requested from SIR and the CQI information requested from transmission processor 9 is transmitted. Obviously, a table can be used to request CQI, corresponding to the measured SIR, and the requested CQI can be corrected as a small CQI.

In the previous practical example, the reception status of HS-PDSCH can be considered an assumption method and used for notifications. For operations aside from assuming the reception status, the practical examples of CQI correction operation should be followed.

The reception status of HS-PDSCH can be evaluated with great accuracy by following the above.

Description of Preferred Embodiment 4

In this exemplary embodiment, the wireless base station itself adjusts the modulation controls, taking into consideration the reception status of HS-PDSCH. In other words, the controller of the wireless base station understands whether to transmit each of HS-PDSCH's subframes. The received CQI information is corrected according to whether the CQI received from the mobile station was generated based on the reception environment measured during the transmission period of HS-PDSCH (first period) or whether it was generated based on the reception environment measured during the non-transmission period of HS-PDSCH (second period), and adaptive modulation control is carried out according to the CQI information after the correction.

Specifically, the controller 10 in Figure 5 determines whether the CQI information received by reception processor 26 is based on the received SIR measured during the first period or based on the received SIR measured during the second period. As shown in Figure 1, it is clear that CQI information is based on the measured SIR between the transmission timing of CQI information and the predetermined period before the predetermined slot (period from before the fourth slot to before the first slot). Therefore, controller 10 checks the history of HS-PDSCH's reception status during this predetermined period (transmission record of HS-PDSCH is recorded).

When controller 10 determines, from the history, that the received CQI is based on measurement results measured during the first period, the modulation is adjusted according to the CQI. On the other hand, if the received CQI is determined as being based on the measurement results measured during the second period, the CQI is corrected to a CQI smaller than the received CQI and the modulation controls are adjusted according to the CQI after corrections (transmission speed is controlled to be even slower that if the CQI received from the mobile station is used as is). Obviously, controller 10 also takes the data notifying the mobile station by HS-SCCH and sets the data's compatibility with the adaptive modulation control according to the CQI after corrections, and it is transmitted from transmission processor 27.

Furthermore, ideally; controller 10 records the most recent estimated CQI (first CQI) if the CQI is based on measurement results measured from the first period and the most recent estimated CQI (second CQI) if the CQI is based on the measurement results measured from the second period individually, and for each mobile station.

And, when HS-PDSCH is transmitted to the corresponding mobile stations, adaptive modulation control is carried out using the CQI corresponding to the transmission status period of HS-PDSCH closest to the status of the transmitting HS-PDSCH, among the first CQI and the second CQI. In other words, if the transmitting HS-PDSCH is addressed only to one mobile station, the second CQI is applied. If the transmitting HS-PDSCH is addressed to two or more mobile stations, the first CQI may also be applied.

It is preferred that the reception status of HS-PDSCH is defined with over 2 or 3 types and is not limited to the first and second CQI. By recording the corresponding CQI value for each status, the adaptive modulation can be controlled with further accuracy.

The following can be given as representative examples of status types: transmission of HS-PDSCH to only its mobile station; transmission of HS-PDSCH to its mobile station and N (positive integer) other units; level M within the N ranking of total transmitting power (M is over and N is under); level M within the N ranking of traffic of other downward and upward separate channels (M is over and N is under); and level M within the N ranking of traffic of other downward and upward common channels (M is over and N is under), etc.

Various types of embodiment were explained in the above, but all of the practical examples had in common the point that, in a wireless communications system provided with a transmission device that carries out adaptive modulation control and a reception device that receives signals from the transmission device, adaptive modulation control is carried out based on the transmission status of a signal transmitted by the adaptive modulation control of a transmission device.

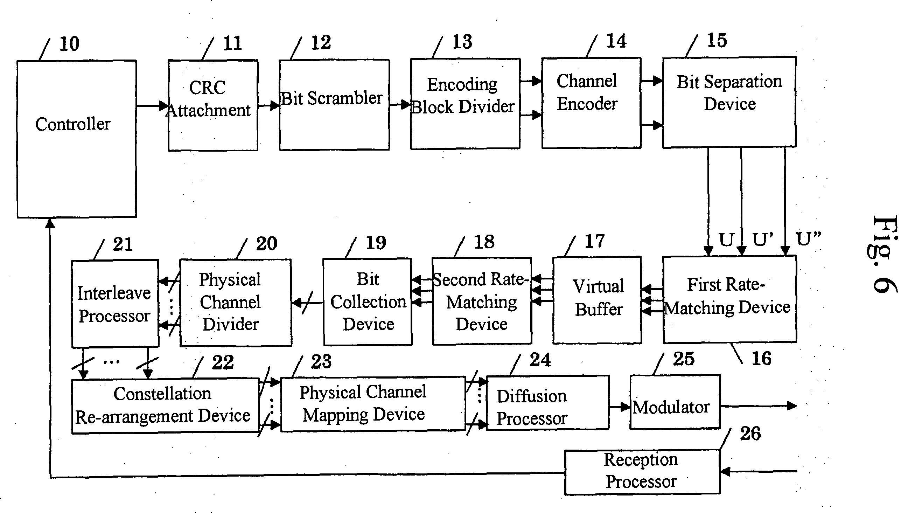

Finally, in Figure 6 the base station configuration is explained, using a detailed drawing. Furthermore, the transmission processor components of HS-PDSCH (11-25) of transmission processor 27 and reception processor 26 are explained in detail.

In the diagram, controller 10 outputs the transmission data (data transmitted within one subframe) transmitted through HS-PDSCH in sequence and indicates the controller controlling the various components (11-26). As HS-PDSCH is a common channel, it is permitted that the transmission data output in sequence be each addressed to a different mobile station.

CRC attachment part 11 executes CRC calculations regarding the transmission data input in sequence (data transmitting within the same wireless frame) and adds the CRC calculation results to the tail end of this transmission data. Bit scrambler 12 is the unit that, for the transmission data, to the tail of which the CRC calculation results have been added, scrambles the bit units of the transmission data added as CRC calculation results and randomizes the transmission data.

Code block segmentation part 13 divides (e.g. into two equal parts) the transmission data when a predetermined data length is exceeded, to avoid increasing the calculations of the decoder on the receiving side, since, in the channel encoding carried out next, the length of the data is made the subject of encoding. The diagram shows the output when the input data exceeds the predetermined data length and shows the output after it has been divided into two equal parts (divided into the first and second data blocks). Needless to say, examples of divisions other than two can be produced, but there are also examples of data with different data lengths.

Channel coding part 14 separately executes error-correcting coding processing for the various divided data. Furthermore, it is desirable that the above-mentioned turbo coder is utilized as channel coder 14 and a turbo coder, for example, is used here.

Accordingly, the first output, as previously explained, for the first block includes: the important system bit (U), the same as the encoding target data; the first redundant bit (U'), resulting from the convolution coding of the system bit (U); and the second redundant bit (U"), resulting from the same convolution coding after an interleave process is executed on the system bit. Similarly, the second output for the second block includes: the system bit (U) for the second block, the first redundant bit (U'), and the second redundant bit (U").

Bit separation device 15 divides and outputs each of the first and second blocks serial-input from channel encoder 14 (turbo encoder), the system bit (U), the first redundant bit (U'), and the second redundant bit (U"). Furthermore, as the second block is identical, only the output corresponding to the first block is illustrated.

First rate-matching part 16 executes the rate matching process, such as a puncture process (thinning out) on the input data so that the input data (when the data is divided into several blocks, all of the data in the divided blocks) to make it fit into the predetermined area of the subsequent virtual buffer 17.

First rate matching part 16 executes rate matching by the first pattern during initial transmission or when retransmission is not specified. The quantity of data after this rate matching should be established at the same (or less) capacity as the memory (memory 31, mentioned later) to implement H-ARQ by the mobile station receiving data. For example, the information regarding the performance of mobile stations while the mobile station is calling is transmitted to the base station. Controller 10 of the base station recognizes the memory capacity of the mobile station's H-ARQ, based on the information regarding the received performance. The first rate-matching device notifies and establishes the recognized capacity to the virtual buffer 17.

Virtual buffer 17 stores the data processed by the first rate-matching device 16 in the area established in response to the reception processing capacity of the transmission targeted mobile station by controller 10.

Second rate-matching part 18 adjusts data to a length storable in the 1 subframe specified by the controller 10. Controller 10 executes the puncture (thinning out) and repetitious processes (repeating) to adjust the input data to the specified length.

Furthermore, since, in HS-PDSCH, as the parameters of the modulation method, diffusion rate, and code numbers (channel numbers) can be changed, the received number of bits is not constant even if the subframes are the same length. Controller 10 notifies the second rate-matching device of the number of bits corresponding to the parameters as the data length that can be received by one subframe. In addition, controller 10 notifies the second rate-matching part 18 of the pattern after conversion, for instance when the rate matching pattern changes every retransmission.

Bit collection device 19 arranges the data from the second rate-matching device 18 into multiple bit strings. In other words, by arranging the data of the first and second blocks by a predetermined bit arranging method, multiple bit strings are output indicating the signal points on the various phase planes.

Furthermore, in this example, the bit string is configured from 4 bits to utilize the 16-bit QAM modulation method. Obviously, there are other examples of multi-bit modulation methods (i.e. 8-PSK, etc.)

Physical channel divider 20 divides and outputs the bit string to the system with the same number as the diffusion code (code number) number indicated by controller 10. In other words, if the code number of the transmission parameter is N, this refers to the physical channel segmentation device which distributes and outputs into the 1-N system in the input order of the bit string.

Interleaving part 21 executes the interleaving process and outputs the various bit strings of the N system.

Constellation re-arrangement device 22 rearrange bits within the input bit string for 16QAM. For example, at the time of initial transmission, the various input bit strings pass through and output and the bits are rearranged during the previously explained H-ARQ retransmission. As bit rearrangements, for instance, the top and bottom bits can be exchanged, etc., and for multiple strings, it is preferable that bits be interchanged according to the same rule. It is preferred that the bit strings are rearranged by interchanging the upper and lower bits. Furthermore, they may pass in that state during retransmission.

Physical channel mapping part 23 sorts the latter-part N-system bit string into the diffusion part corresponding to the latter-part diffusion processor.

Diffusion part 24 executes the diffusion process and outputs according to the different diffusion codes. The corresponding voltage values of I and Q are output according to each of the bit strings of the N system of the multiple diffused parts.

Modulation part 25 combines the various signals diffused by diffusion processor 24. Accordingly, amplitude phase modulation is carried out in the 16-bit QAM modulation mode, and after the frequency is converted to a wireless signal, the signal is output to the antenna and the modulating part makes the wireless signal transmittable.

Receiver 26 receives signals from the mobile station through HS-DPCCH, and this device sends ACK signals and NACK signals, and CQI information to controller 10.

Although specific embodiments of the present invention have been described, it will be understood by those of skill in the art that there are other embodiments that are equivalent to the described embodiments. Accordingly, it is to be understood that the invention is not to be limited by the specific illustrated embodiments, but only by the scope of the appended claims.

## Claims

1. A communications device for transmitting adaptive modulation control parameters for communication devices that control adaptive modulation, comprising:
a measuring device operable to measure the reception environment; and
a parameter generator operable to generate the adaptive modulation control parameters based on measurement results of the reception environment and on a reception status of a predefined channel within a period of the measurement of the reception environment.

2. The communications device of Claim 1, further comprising: a transmission rate generator operable to generate a transmission rate based on the generated adaptive modulation control parameters, wherein the transmission rate generated when the predefined channel is not transmitted to any of the mobile stations is a lower transmission rate than the transmission rate generated when the predefined channel is at least transmitted to the communications device within the measurement period.

3. The communications device of Claim 1, wherein the parameter generator is further operable to reflect in the parameters generated when the predefined channel is not transmitted to any of the mobile stations the measurement results when the predefined channel is at least transmitted to the communications device within the measurement period.

4. The communications device of Claim 1, wherein the measuring part is further operable to divide the measurement period into a first measurement period and a second measurement period and to combine weighted measurement results from both periods to form the measurement result.

5. The communications device of Claim 1, wherein the reception status of the predefined channel is determined according to whether or not the predefined channel was transmitted to the communications device within the measurement period.

6. The communications device of Claim 1, wherein the reception status of the predefined channel is determined based on whether or not a non-transmission period of the predefined channel is assumed to be included within the measurement period.

7. The communications device of Claim 6, wherein the assumption of whether or not a non-transmission period of the predefmed channel is included within the measurement period is determined based on a total reception level and a total received power.

8. A mobile station in a mobile communications system compatible with HSDPA, comprising: a CQI information generator operable to generate CQI information to be transmitted to a base station based on an HS-PDSCH reception status during a CPICH reception quality measurement period.

9. The mobile station of Claim 8, further comprising:
a transmission rate generator operable to generate a transmission rate based on the generated CQI information, wherein the transmission rate generated when the HS-PDSCH is not transmitted to any of the mobile stations is a lower transmission rate than the transmission rate generated when the HS-PDSCH is at least transmitted to the mobile station within the CPICH reception quality measurement period.

10. The mobile station of Claim 8, wherein the CQI information generator is further operable to reflect in the CQI information generated when the HS-PDSCH channel is not transmitted to any of the mobile stations the measurement results when the HS-PDSCH channel is at least transmitted to the mobile station within the CPICH reception quality measurement period.

11. The mobile station of Claim 8, further comprising a measuring part operable to divide the CPICH reception quality measurement.period into a first measurement period and a second measurement period and to combine weighted measurement results from both periods to form the CPICH reception quality measurement result.

12. The mobile station of Claim 8, wherein the HS-PDSCH reception status is determined according to whether or not the HS-PDSCH channel was transmitted to the mobile station within the measurement period.

13. The mobile station of Claim 8, wherein the HS-PDSCH reception status is determined based on whether or not a non-transmission period of the HS-PDSCH channel is assumed to be included within the measurement period.

14. The mobile station of Claim 13, wherein the assumption of whether or not a non-transmission period of the HS-PDSCH channel is included within the CPICH reception quality measurement period is determined based on a total reception level and a total received power.

15. A communications device operable to receive information on parameters dependent on a reception environment from at least one reception device that is a potential target of data transmission using a common channel and to carry out transmission of data to the reception device through the common channel, the communications device comprising:
a notification device operable to notify regarding whether data is transmitted through the common channel to none of the at least one reception devices or data is transmitted through the common channel to any of the at least one reception device.

16. The communications device of Claim 15, wherein the data that is transmitted through the common channel to at least one reception device, is not limited to transmission to the reception device that is the notification target.

17. A communications device comprising:
a reception device operable to receive from a transmission device notification regarding whether data is transmitted through a common channel to none of at least one reception devices or data is transmitted through the common channel to any of the at least one reception devices; and
a transmission processor operable to transmit adaptive modulation control parameters based on the notification.

18. The communications device of Claim 17, wherein the data that is transmitted through the common channel to at any of the least one reception devices, is not limited to transmission to the reception device that is the notification target.

19. In a wireless communications system having a transmission device operable to carry out adaptive modulation control and a reception device operable to receive a signal from the transmission device, a communications device comprising:
a controller operable to carry out adaptive modulation control based on a reception status of the signal transmitted by the transmitting device by the reception device.

20. The communications device of Claim 19, wherein the controller comprises:
a parameter generator operable to generate the adaptive modulation control parameters based on measurement results of the reception environment and on a reception status of a predefined channel within a period of the measurement of the reception environment.

21. The communications device of Claim 20, further comprising:
a transmission rate generator operable to generate a transmission rate based on the generated adaptive modulation control parameters, wherein the transmission rate generated when the predefined channel is not transmitted to any of the mobile stations is a lower transmission rate than the transmission rate generated when the predefined channel is at least transmitted to the communications device within the measurement period.

22. The communications device of Claim 20, wherein the parameter generator is further operable to reflect in the parameters generated when the predefined channel is not transmitted to any of the mobile stations the measurement results when the predefined channel is at least transmitted to the communications device within the measurement period.

23. The communications device of Claim 20, wherein the measuring part is further operable to divide the measurement period into a first measurement period and a second measurement period and to combine weighted measurement results from both periods to form the measurement result.

24. The communications device of Claim 20, wherein the reception status of the predefined channel is determined according to whether or not the predefmed channel was transmitted to the communications device within the measurement period.

25. The communications device of Claim 20, wherein the reception status of the predefined channel is determined based on whether or not a non-transmission period of the predefined channel is assumed to be included within the measurement period.

26. The communications device of Claim 25, wherein the assumption of whether or not a non-transmission period of the predefined channel is included within the measurement period is determined based on a total reception level and a total received power.

27. A communications device operable to receive information on parameters dependent on a reception environment from a reception device that is a potential target of a data transmission and to affect the transmission of data through the common channel based on adaptive modulation control based on the parameter information, the communications device comprising:
a controller operable to perform adaptive modulation control based on the parameter information and on a transmission status of data from the communications device through the common channel.

28. A wireless base station in an HSDPA-compatible wireless communications system, comprising:
a controller that carries out modulation control based on a transmission status of a HS-PDSCH channel and CQI information from the mobile station.

29. An HSDPA wireless base station in a mobile communication system, comprising:
a notification device operable to notify a mobile device of a transmission status of a HS-PDSCH channel; and
a controller operable to perform adaptive modulation control based on CQI information generated by the mobile device based on the notification.
